# EUROPEAN PATENT APPLICATION

(11) **EP 2 826 990 A1**
(43) Date of publication of application: **21.01.2015**
(21) Application number: 13761644.7
(22) Date of filing: 13.03.2013
(51) Int. Cl.: F03B 17/06

(54) **SYSTEM FOR GENERATING ELECTRICITY BY MEANS OF NATURAL-ELEMENT PRESSURE**

(30) Priority: 14.03.2012 ES 201200291
(71) Applicant: CAMPILLO FERRE, Joan, 43780 Gandesa Tarragona (ES)
(72) Inventor: CAMPILLO FERRE, Joan, 43780 Gandesa Tarragona (ES)
(86) International application number: PCT/ES2013/000077
(87) International publication number: WO 2013/135924

(57) **Abstract**

The subject matter of the present invention is a system for generating electricity by means of natural-element pressure, which is set up, in terms of the basic use thereof, to utilize the hydraulic pressure in a channel (1) of flowing water (2) with preferably sloping lateral zones (3), comprising platforms (4) and turbines (5) supported on shafts (6) and (7) located transversely over the channel (1). The platform (4) has a first, straight portion (41) over the flowing water (2) and a second, submerged portion (42) with a curvature (43) below which is the turbine (5) and ending with a final straight portion. The shafts (6) and (7) of platforms (4) and turbines (5) are fixed in supporting ends (11) and (8) anchored at the sides (3) of the channel (1), linking the shaft (7) of the turbine to an alternator (9) connected to the grid (10). Upstream of the platforms are gates (12) in the form of a funnel that reduce the amount of water (2) passing through.

## Description

### Object of the invention

The present invention, as expressed in the title of this specification, refers to a system for generating electricity by means of natural-element pressure that due to their conformation, properties and applications improves mechanisms and systems currently on the market and all that forms part of the state of the corresponding technique.

This invention concretizes in an electric power generator that uses mainly the hydraulic pressure of water flowing in rivers, natural or artificial conduits or water flowing, using a system of tilting platforms, linked to one or more water turbines and sequentially dipped in water. Modifying the layout and location of the physical structure, the generator is equally functional harnessing the power of wind energy.

### State of the art

The growing demand for energy in modern society has led the development of numerous energy plans to compete with the use of hydrocarbons, seeking, clean, reusable and environmentally friendly, cost effective and low cost energy. From these premises, projects based on the energy generated by natural elements (water, wind, ..), i.e., wind, solar and hydropower are proving viable in both urban and rural areas and in the household and corporate sector. Of all these energies, derived from the sun and wind are obviously subject to weather factors while hydropower, both fresh and salt water, has greater continuity by persistent currents and river flows.

However, the hydraulic energy from the sea, either by the natural waves or ocean currents, involves construction of significant structures, high cost and also with a significant environmental impact.

Meanwhile, hydropower derived from freshwater rivers and swamps, with a long tradition of hydraulic reservoirs and dams, has in its favor a long useful life, which pays for the investment and has a relative environmental impact. In contrast, requires significant height difference so that water has the capacity to generate a kinetic energy which will be transformed into mechanical energy and then into electrical power energy.

Plans have also been developed to take advantage of the water flow of rivers and channels, involving in most cases the creation of artificial slopes for a height variation that causes the falling water or the use of gadgets with blades that remove the water to lead it to the turbines.

In terms of the industrial property, there are many patents that affect this issue. For example, the patent P32344472, which refers to a device for producing regenerative and has renewable energy from water, which incorporates a shaft and has vanes in angular position that are adjustable from each other. Patent P200802266 also developed a system for energy recovery water channel consisting of one or more turbines formed by a and propeller arranged longitudinally inside the channel, located so that the water flow enters through the same transforming the kinetic energy it into mechanical rotation energy. The patent P200003140 refers to an apparatus for producing electrical energy in through waters, rivers, aqueducts, etc. and has developed a floating structure, anchored in the through water and with articulated shovels positioned in the lower part exerting a drag thrust on all the spinning acceleration mechanism connected to the generator that produces an electromotive force. As a last example is the patent P200901375 referred to a coupling device for submersible turbines and water wheels for energy use of the flow of a stream and that it concretizes in a double movement mechanism of simultaneous performance directly or through a ballast in a sea or river bed, with a hydrodynamic shape to follow the water flow to a turbine.

In these and other proposals two common aspects are identified: the presence of turbines as a base element for harnessing energy from the fluid, in this case water, and will take advantage of the natural strength of piped water in motion, using structures, gadgets and devices of great ostentation and in many cases technical complexity.

For its part, the applicant has no knowledge that it has been developed a technical solution that addresses ways to increase the pressure and natural force of moving water without using the resource of its falling from a higher level to a lower level.

Following this approach of harnessing the power of natural elements and specifically water, it is understood, therefore, that there should be a system to increase the pressure and accordingly the natural force of flowing water in a natural or artificial channels in rivers or any water flow in a simple, clean and low environmental impact, not altering or manipulating the bed of such channeling i.e., without creating artificial slopes and with the intervention of the minimum elements or devices.

### Aim of the invention

Thus this patent develops a system for generating electricity by means of natural-element pressure, intended primarily for installation in water canalizations, both natural (rivers, etc.) and artificial (channels, etc.), that is, in any water flow and that alternately and depending on its location layout also responds to the pressure of the wind power.

Based on the conformation of the system that will be discussed below, its application in water resources is a priority to understand that within the natural elements, in principle, the circulating water is more predictable than other elements such as wind or sunshine, dependent on the weather and climate outside the action of man, which, however, may intervene in the flow of a river, for example, by opening the gates of a reservoir.

Thus, the claimed system whose main objective is to generate electric power from the force resulting from the action of natural elements and specifically and especially by natural pressure generated by the circulating water in a channel, said pressure increased with the installation of one or more tilting platforms engaged to a shaft on one end and linked to a turbine in contact with water at the other end.

The formation and the structure of this hydraulic pressure generator is simple.

The centerpiece is a mainly a straight platform and positioned on an inclined plane towards the circulating water of considerable dimensions and weight and sufficient to exert on said circulating water a constant pressure. This platform has in its structure a segment of a substantially curved shape, from which it retrieves the previously described straight conformation.

This platform is engaged and assembled to an axis which allows the tilting movement of the platform and which cuts across the water channel, being positioned on the water surface or, if appropriate, partially immersed in the water, in any case anchored on the two sides of the channel, and counting on relevant roller and friction bearings.

The portion of the platform attached to the shaft is likewise positioned on the water surface while its other end, free, is immersed in the water due to the tilting referred to above. And it is precisely on this end in contact with the water, which coincides with the curved shape above mentioned, the platform incorporates the friction bearings that link with the shaft which engages with the turbine which, in turn, is immersed in contact with pressure from the circulating water. This turbine incorporates few shovels as necessary depending on the diameter of the shaft that supports it.

In its turn, the shaft where the turbine is engaged it is anchored to the sides of the channel, allowing its coupling with an alternator in order to fulfill its basic function: transform the circulating water pressure first into mechanical energy and then into electrical power energy.

This anchorage of the turbine clamping shaft to the sides of the channel is made by introducing a shaft end, with the help and leaning on a rolling bearing, in terminal support areas, with an inclined plane or variable vertical plane, the latter of pneumatic nature so that there are no water leakages in the channel. Said support terminals are located in the generally inclined channel side area, and, in its turn, are directly connected to an alternator or generator that shunts (sents dice Simon) the electric power to the mains.

Depending on the size of the water channel and, subsequently, on the platform, it is possible to add more associated turbines to said platform, evenly spaced from one another.

In any case, the turbine(s) can be vertically located both in the channel sides and in any point of its (their) cross-drive shaft, with the same anchoring systems and adjusting the position of the same.

In order to increase the circulating water pressure, according to the system a series of elements similar to funnel-shaped sluice gates are placed in the channel sides and allow to control its opening or closing. In case of closing the water flow width is reduced, which leads to an increase in the circulating water pressure and strength when it passes through the platform.

Likewise, and depending on certain circumstances or needs, a central anchorage in the bed of the platform(s) channel is provided for.

The same solution is provided for in the platform axis, is it possible to clamp the same both with an anchorage to the base of the channel, e.g. with a supporting column, or from its upper side, from above, with the systems that are most efficient for securing its stability.

Likewise, and in order to prevent the water from flowing out of the channel, the platform has side closing elements/stoppers?.

The same concept of the presented system is applicable, alternatively, for harnessing the wind energy. In this case, the generator varies its location and physical disposition, which passes to a verticality in the turbine assembly, with a vertical shaft associated to the alternator with the relevant rolling bearings, in which shaft the blades are inserted and fitted, in the required amount and sizes.

### Description of the drawings

For a better understanding of the innovation herein claimed, we attach sheets with drawings, which must be analyzed and regarded just as examples, not being limiting or restrictive in nature.
Figure 1.- Sketch of the installation of the claimed generator applied to the use of the hydraulic pressure.
Figure 2.- Detail of the platform and the turbine, showing the shaft of the platform and the turbine shaft.
Figure 3.- Detail of the platform, with its shaft and the turbine shaft.
Figure 4.- Detail of the platform anchorage.
Figure 5.- Detail of the platform anchorage.
Figure 6.- Detail of the turbine shaft.
Figure 7.- Sketch of the installation of the generator, applied to the use of the wind pressure.

### Preferred execution of the invention

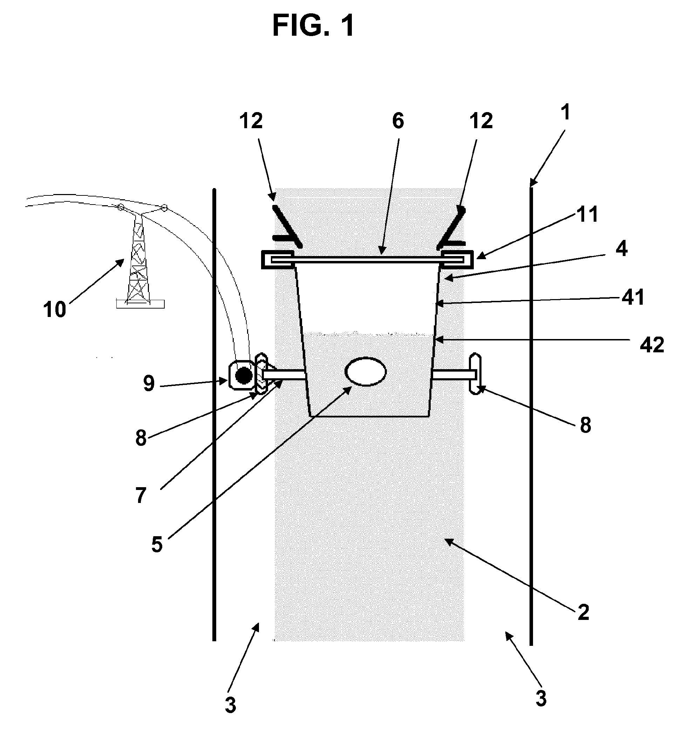

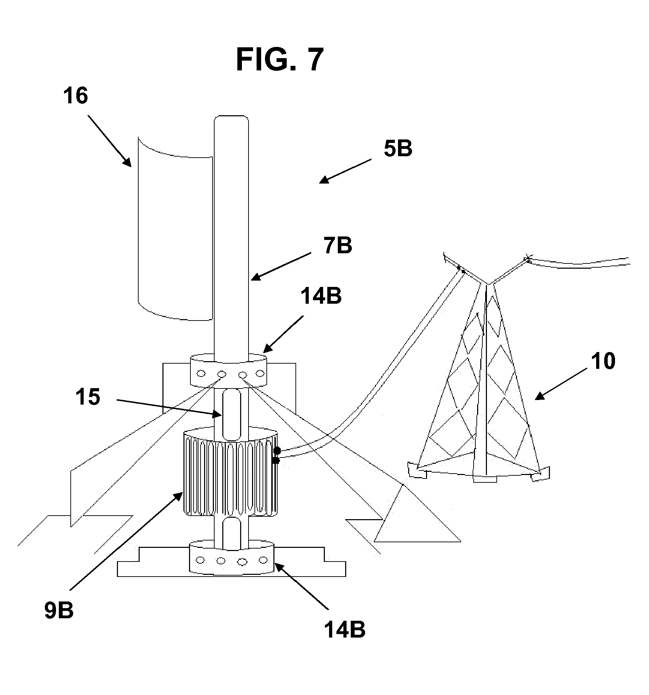

In the following drawings, specifically in figures 1, 2, 3, 4, 5, and 6, a first practical application of the subject of this patent, defined as a system of generating electricity out of hydraulic pressure, intended primarily for installation in circulating water channels and secondarily for the use of wind power as showed in the figure 7.

The figure 1 shows the layout of the claimed system installed in a channel (1) of circulating water (2) with side areas (3) of firm ground delineated and preferably tilted. The generator is made up of two basic elements: a platform (4) and a turbine (5), both associated and anchored in their corresponding supporting shafts (6) and (7). The number of existing platforms and turbines is not limited, since it depends on the size of the channel and on the energy requirements to be covered.

Both shafts (6) and (7) cut across the channel (1) of circulating water (2). The platform (4) shaft (6) is preferably placed above the water level (2), although it can also be partially submerged in the water flow (2). In its turn, the turbine (5) shaft (7) is submerged in the water (2).

The platform (4), of enough size and weight, is associated to its shaft (6) in the side of the head, allowing it to tilt, and is placed in the first straight section (41) above the circulating water (2), while a second section (42) remains submerged in the water (2), so that it is under this side of the turbine (5), which this way receives the circulating water pressure (2).

The platform (4) shaft (6) is fastened to supporting terminals (11) that are fixed in the channel sides (3). In its turn, the turbine (5) shaft (7) is also connected to the other supporting terminals (8) that are fixed in the channel (1) sides (3), through which it is linked to an alternator (9) that shunts (SENTS propone SIMON) the electric power to the mains (10).

The same figure 1 shows another element of the claimed generation system, which materializes in some sluice gates (12) or similar elements, funnel-shaped and provided with an opening and closing mechanism, that allows to increase or reduce the water flow width (2). By closing the sluice gate (2), the free space where the water circulates (2) is reduced, which increases water pressure and strength when it passes through the platform (4) and, subsequently, through the turbine (5).

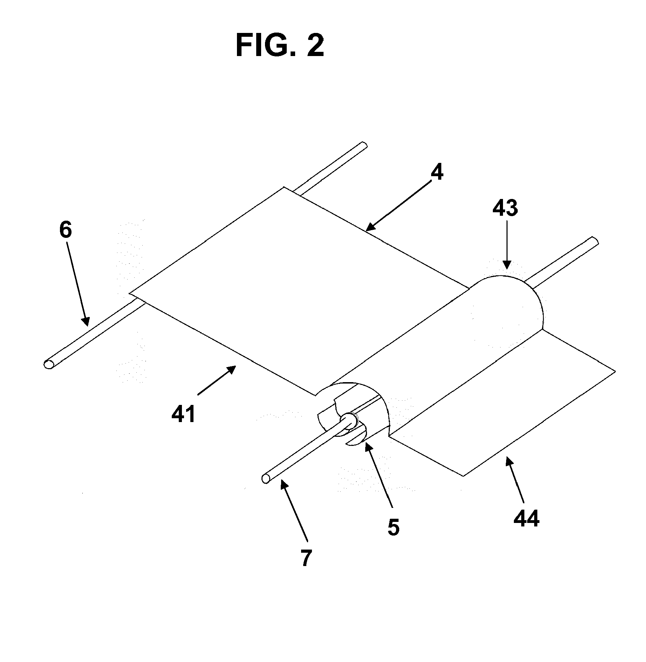

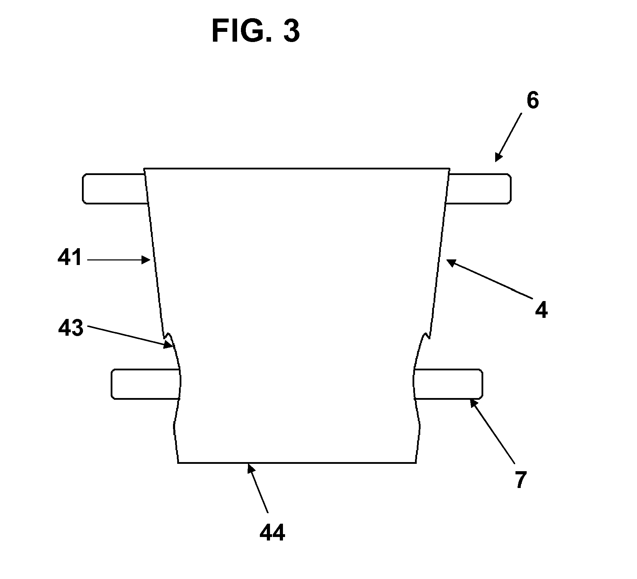

Figure 1 and especially figures 2 and 3 depict the platform (4), which has substantially a straight and flat shape, and is positioned on an inclined plane as regards the circulating water, as showed in the figure 1, so that the first section (41) of said platform (4) is placed above the water level (2), while a second section (42) remains submerged in the water. Precisely in this submerged part, the platform has a substantially curved shape (43) which extends in a last straight section (44).

The same figure 2 shows the detail, already put forward in figure 1, of the curved part (43) of the platform (4) and the turbine (5) which is located precisely in the space created by said curvature (43), in which said turbine (5) is attached to a transversal shaft (7) joined to the platform (4) by bearings, so that the turbine (5) is submerged in direct contact with the pressure of the flowing water (2). The number of blades on this turbine varies depending on the diameter of the shaft supporting it.

Figure 3 shows clearly the position of the shaft (6) of the platform (4) in a higher plane and the shaft (7) of the turbine (5) in a lower plane, coinciding with the curvature (43) of the platform (4).

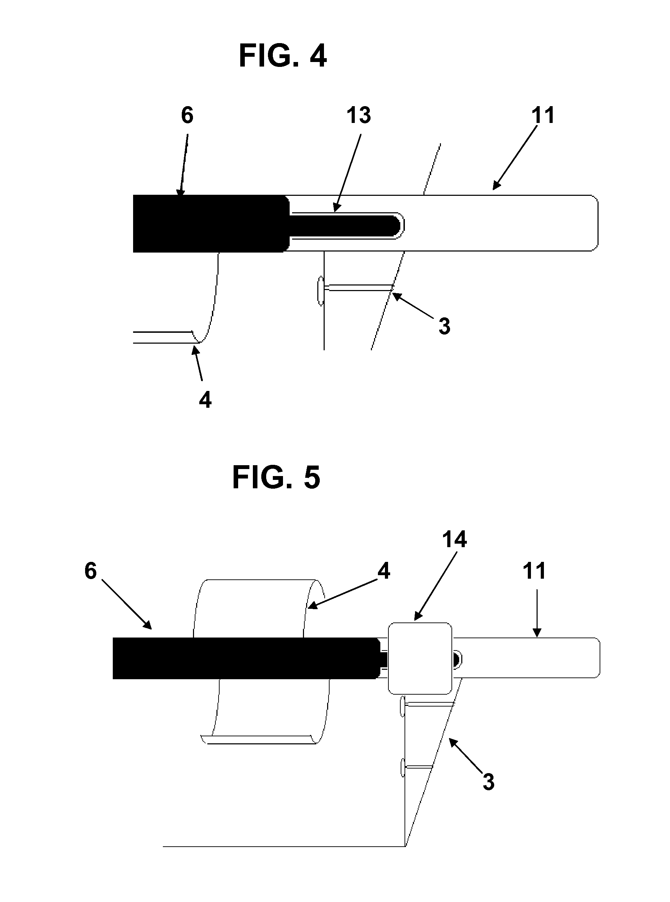

Figures 4 and 5 show the anchoring of the shaft (6) of the platform (4) in support terminals (11) anchored on the sides (3) of the channel (2). The shaft (6) extends at one end into a rod (13) which is inserted and adjusted in the support terminal (11), with two different types of bearings (14) to prevent friction in the rocking movement of the shaft (6) which it transmits to the platform (4).

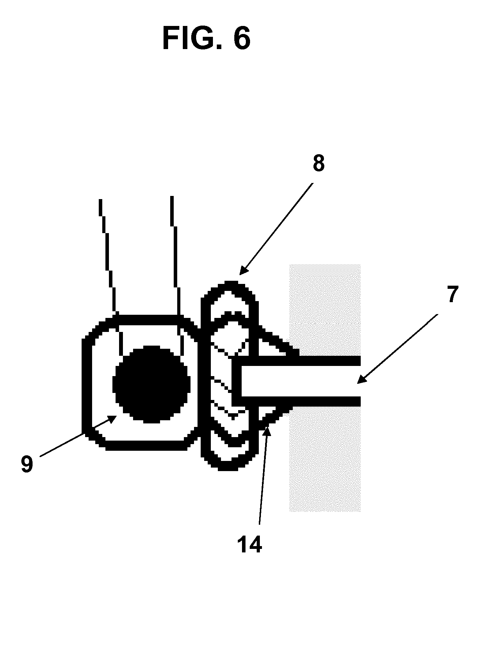

Figure 6 shows the detail of the anchoring of the shaft (7) of the turbine (5) in the support terminal (8) fixed on the side (3), preferably sloping, of the channel. Said shaft (7), before it emerges from the water, fits in the support terminal (8), which has a sloping arrangement or, possibly, vertical of a pneumatic nature, and which in any event involves a bearing (14) to achieve the desired adjustment, finally hooking up with an alternator (9) which transmits the current to the grid.

The way this system works is simple, as it uses the natural hydraulic pressure of the flowing water (2) in the channel (1), to drive the turbine (5), which transforms the mechanical energy generated into electrical energy. The platform (4), of sufficient size and weight, and using a rocking movement, acts by exercising a constant pressure on the flowing water, increasing the natural pressure thereof. The turbine (5) located below the submerged curvature of the platform collects said pressure and transforms it into energy, transmitting it in turn to the alternator to which it is associated by means of the shaft (7) which supports it and which in turn connects it, by means of bearings, with the platform (4). The pressure of the water increases with the closure of the sluice gates (12) located at a point prior to the platform which, when closed, narrow and reduce the passage of the water flow, increasing the force of the flowing water.

Figure 7 shows the alternative application of the turbine to make use of wind power. Compared to what has already been presented, the principal variant in this case is the disappearance of the platform described and the new vertical position of the turbine set (5B), which changes from a horizontal arrangement to a vertical arrangement, with its shaft (7B) linked to the alternator (9B) by means of the corresponding bearings (14B), with said alternator (9B) associated with its shaft (15) and connected to the grid (10) to which it sends the electrical energy generated. For its part, the shaft (7B) of the turbine continues to be the holding and anchoring point for the blades (16), the size and number of which varies depending on the requirements of each installation.

In the light of everything described in this report, the numerous advantages of the application of the claimed system are evident. The system continues the tradition of using the pressure and hydraulic force of water to generate electricity, but has no need for a substantial difference in height between two flows of water for the freefall of the liquid element to generate the pressure necessary, as happens in reservoirs and hydroelectric dams.

It also improves the different plans and systems for making use of energy from seawater, in particular tidal energy, which require major economic investments and substantial changes in the environment to construct the required installations.

On the contrary, the system presented in this invention patent is viable in any channel of flowing water, (rivers, streams, canals, etc.) with a minimum inclination, merely sufficient for the water not to become stagnant and continue flowing. The environmental impact is minimal, and has no effect on the ecosystem, achieving a continuous and inexhaustible generation of energy, which is clean and has no associated polluting loads. As regards the material part, the different elements may be constructed using a variety of materials such as nylon or hard plastic, and also heavy materials such as steel or any other suitable material.

And, of course, it has a high energy yield with minimum maintenance cost.

It is not considered necessary to make this description any longer for any expert in the matter to understand the scope of the invention and the advantages deriving from it. The materials, shape, size and arrangement of the elements may be changed, provided this does not mean an alteration in the essential nature of the invention. The terms in which this report has been drawn up must always be taken in their broadest, non-restrictive sense.

## Claims

1. System for generating electricity by means of natural-element pressure, of the type installed in a channel (1) of flowing water (2) or in other sites, characterized essentially in that it is formed of one or more platforms (4) and one or more turbines (5), all of which are associated and anchored on supporting shafts (6) and (7) which are situated in a transversal position with regard to the channel (1), which also has elements similar to sluice gates (12).

2. System for generating electricity by means of natural-element pressure, according to the 1st claim, characterized essentially in that the platform (4), which has a rocking movement, is associated at its head with a transversal shaft (6), the first section (41) of which is mostly straight and flat in its first section, and which extends into a section which is notably curved (43), ending in a final straight section (44), in which said platform has sufficient weight and size and is positioned on a sloping plane in relation to the flowing water (2), so that one part (41) of said platform (4) is positioned above the water level while another part (42), specifically from the curved area (43) onwards, is submerged in the water (2).

3. System for generating electricity by means of natural-element pressure, according to claims 1 and 2, characterized essentially in that the turbine (5) is located below the platform (4), in the space created by the curvature (43), with said turbine (5) attached to a transversal shaft (7) joined to the platform (4) by means of bearings, so that the turbine (5) is submerged and in direct contact with the pressure of the flowing water (2).

4. System for generating electricity by means of natural-element pressure, according to claims 1 and 3, characterized essentially in that the turbine has as many blades as necessary according to the diameter of the shaft supporting it.

5. System for generating electricity by means of natural-element pressure, according to claims 1, 2 and 3, characterized essentially in that the shaft (6) of the platform (4) and the shaft (7) of the turbine (5) are positioned in a transversal manner with regard to the channel (1) of flowing water (2), with the shaft (6) of the platform (4) being preferably located above the level of the water, although it may also be partially immersed in the water current (2), while the shaft (7) of the turbine (5) is submerged in the water (2).

6. System for generating electricity by means of natural-element pressure, according to claims 1, 2 and 5, characterized essentially in that the shaft (6) of the platform (4) is assembled and anchored on supporting terminals (11) anchored on the sides (3) of the channel (1), with the end of the shaft (6) extending into a rod (13) which is inserted and adjusted in the support terminal (11), and which has different types of bearings (14).

7. System for generating electricity by means of natural-element pressure, according to claims 1, 3 and 5, characterized essentially in that the shaft (7) of the turbine (5) is held and anchored on a support terminal (8) fixed on the side (3), preferably sloping, of the channel (1), in which said shaft (7), before emerging from the water, is fixed on said support terminal (11), which has a sloping formation or, if required, vertical of a pneumatic nature, which in any event involves a bearing (14) and is connected to an alternator (9).

8. System for generating electricity by means of natural-element pressure, according to claims 1, 3, 4, 5 and 7, characterized essentially in that the turbine or turbines (5) are situated vertically both on the sides (3) of the channel and at any point of its transversal shaft (7), having the same anchoring systems and adjusting the position thereof.

9. System for generating electricity by means of natural-element pressure, according to claims 1 and 2, characterized essentially in that the platform or platforms (4) have a central anchoring point on the floor of the channel (1).

10. System for generating electricity by means of natural-element pressure, according to claims 1, 2, 5 and 6, characterized essentially in that the shaft (6) of the platform (4) has anchoring and supporting means, both with regard to the base of the channel (1) and from its upper part.

11. System for generating electricity by means of natural-element pressure, according to claims 1 and 2, characterized essentially in that the platform (4) has closures on the sides.

12. System for generating electricity by means of natural-element pressure, according to claim 1, characterized essentially in that it incorporates sluice gates (12) or similar, funnel-shaped elements, which have an opening and closing mechanism and are located in a position prior to the platform or platforms (4).

13. System for generating electricity by means of natural-element pressure, according to claim 1, characterized essentially in that, alternatively, the platform (4) is eliminated and the turbine set (5B) is positioned vertically, with its shaft (7B) linked to the alternator (9B) by means of bearings (14B), in which said alternator (9B) is associated with its shaft (15) and connected to the grid (10) to which it sends the electrical energy generated and in which the shaft (7Bb) of the turbine (5B) is the holding and anchoring point for blades (16) of varying sizes and number.
